# EUROPEAN PATENT APPLICATION

(11) **EP 1 781 032 A2**
(43) Date of publication of application: **02.05.2007**
(21) Application number: 06122739.3
(22) Date of filing: 23.10.2006
(51) Int. Cl.: H04N 7/16

(54) **System and method for controlling conditional access systems in a digital television decoder receiving a plurality of streams**

(30) Priority: 27.10.2005 EP 05461004
(71) Applicant: ADVANCED DIGITAL BROADCAST S.A., 1218 Grand-Saconnex (CH)
(72) Inventor: Michalczak, Maciej, 65-245 Zielona Gora (PL)
(74) Representative: Hudy, Ludwik

(57) **Abstract**

In a system for controlling conditional access systems in a digital television decoder (101) with a signal receiving block (102) receiving a plurality of streams (TS1, TS2), a signal processing block (131) having a plurality of decoder descramblers (133, 135) and a conditional access block (141) with at least one conditional access system (143, 145, 147) provided with a client (142, 144, 146) supporting communication via a client interface (152), the conditional access block (141) additionally comprises a client manager (151) handling communication with conditional access systems (143, 145, 147) via clients (142, 144, 146) using the client interface (152) and controlling descrambling of the streams by granting access to decoder descramblers (133, 135) to selected conditional access systems (143, 145, 147). The client manager is provided with a plurality of virtual descrambler sets, where each virtual descrambler set is assigned individually to each decoder descrambler. Furthermore, the client manager has a plurality of decoder descrambler switches, where each decoder descrambler switch is assigned individually to each decoder descrambler for controlling the decoder descrambler by transmitting to it a configuration of the virtual descrambler assigned to a conditional access system, which has been granted access to the particular decoder descrambler.

## Description

The object of the invention is a system for controlling conditional access systems in a digital television decoder receiving a plurality of streams and a method for controlling conditional access systems.

In digital television decoders (so-called set-top boxes) the received stream of data can be descrambled by conditional access (CA) systems embedded in the decoder or provided by external modules.

The conditional access systems embedded in the decoder make use of a decoder descrambler, which is an integral part of the decoder, and smart cards placed in smart card slots of the decoder. The smart cards provide data necessary to configure the decoder descrambler. There are several companies designing embedded CA systems, usually in form of software modules, and the interfaces of CA systems of various providers differ. A typical digital television decoder, to support a specific embedded CA system, must have its software adapted to the interface of the CA system. Such adaptation is problematic for decoder designers, since it requires a considerable workload and resources.

The conditional access systems provided by external modules use an external descrambler, which is an integral part of the module, and therefore external to the digital television decoder, and smart cards placed in a smart card slot of the module. The smart cards provide data necessary to configure the external descrambler. The external CA systems are usually provided by Common Interface (Cl) modules, or by Point of Deployment (POD) modules. These modules are placed in module slots of the decoder. Such systems can be operated via a standard Cl or POD interface, which is provided by a software driver embedded in the decoder. If the stream is descrambled by the descrambler of the external module, the decoder descrambler is deactivated, to avoid double descrambling.

In a typical digital television decoder, a separate decoder descrambler is required for each CA system to be handled. Digital television decoders equipped with PIP (Picture-in-Picture) or DVR (Digital Video Recording) functionality require a concurrent reception of a plurality of data streams. In such a case, the number of necessary descramblers would be equal to the number of handled CA systems multiplied by the number of handled streams, which would greatly expand the structure of the decoder.

From the US Patent No. US 6,185,735 entitled *"Method of operating an apparatus intended to permit access to services"* there is known a method for operating a digital television decoder, in which the processing of streams, scrambled by an algorithm other than the one used by a decoder provider, is blocked for a specific time. The decoder has only one conditional access system, which can support various scrambling methods but only if they are compatible with that conditional access system. Therefore, this solution does not allow concurrent operation of several conditional access systems in the decoder.

From the US Patent Application No. US 2004/0237099 *"Scramble release device for scrambled digital broadcasting streams in broadcasting communication convergence system"* there is known a device for reception of a plurality of scrambled digital broadcasting streams, having a control section, to which several descramblers are connected. The streams are directed to specific descramblers on the basis of their PID identifiers. Therefore, the descramblers and so their conditional access systems are static, i.e. a descrambler is preconfigured to descramble certain scrambling algorithm. Although the system is configured to receive several streams, only one descrambler for each scrambling algorithm is provided. If two streams of the same scrambling system would have to be received, the number of descramblers would double. Therefore, the complexity of the system, due to its static nature, is high.

A European Patent Application No. EP05105666.1 *"System for controlling conditional access systems and method for controlling conditional access systems"* presents a system for a digital television decoder receiving a single stream with a single decoder descrambler, to which access is allowed for a plurality of conditional access systems via virtual descramblers. Each conditional access system is provided with a client, which enables communication with the CA system via a client interface, uniform for all clients. However, the system is capable of receiving a single stream only.

The drawback of the known systems for controlling conditional access systems is their inability to provide easy coordination of the different conditional access systems for descrambling a plurality of data streams. The addition of each new conditional access system requires modification of the existing software to provide compatibility, which is time-consuming and expensive.

It is an object of the present invention to provide system for controlling various conditional access systems in a digital television decoder receiving a plurality of streams.

This and other objects and advantages of the present invention will become apparent from the detailed description, which follows.

In a system for controlling conditional access systems in a digital television decoder with a signal receiving block receiving a plurality of streams, a signal processing block having a plurality of decoder descramblers and a conditional access block with at least one conditional access system provided with a client supporting communication via a client interface, the conditional access block additionally is provided with a client manager handling communication with conditional access systems via clients using the client interface and controlling descrambling of the streams by granting access to decoder descramblers to selected conditional access systems.

The client manager incorporates a plurality of virtual descrambler sets, each virtual descrambler set assigned individually to each decoder descrambler, where the virtual descrambler sets comprise virtual descramblers assigned to each conditional access systems registered for the decoder descrambler, being software objects emulating an interface of the decoder descrambler and a plurality of decoder descrambler switches, each decoder descrambler switch assigned individually to each decoder descrambler, for controlling the decoder descrambler by transmitting to it a configuration of the virtual descrambler assigned to a conditional access system which has been granted access to the particular decoder descrambler.

Preferably, at least one of the conditional access systems is a system handling a plurality of streams and the client provided for the conditional access system handling a plurality of streams comprises a plurality of PSI converters translating commands related to PSI data between the client interface and the system-specific interface and a plurality of descrambler converters translating commands related to descrambler configuration between the client interface and the system-specific interface.

It is of special advantage that at least one of the conditional access systems is a system handling a single stream and the client provided for the conditional access system handling a single stream comprises a single PSI converter translating commands related to PSI data between the client interface and the system-specific interface, a single descrambler converter translating commands related to descrambler configuration between the client interface and the system-specific interface, a PSI converter switch selecting the source of PSI data for the PSI converter and a descrambler converter switch selecting the virtual descrambler for sending commands related to descrambler configuration.

The client manager can comprise a client table for storing data describing the systems handled by individual clients, the data describing at least a capability to descramble each of the streams, the data being used to select the conditional access systems to be granted access to decoder descramblers.

Preferably, in the client table there are additionally stored priorities of individual clients, deciding on a priority of one system versus other systems to be granted access to a particular decoder descrambler.

The conditional access systems can be systems embedded in the decoder and/or systems provided by external modules.

The number of decoder descramblers can be equal to the number of received streams.

In a method for controlling conditional access systems in a digital television decoder with a signal receiving block receiving a plurality of streams and a signal processing block having a plurality of decoder descramblers and a conditional access block with at least one conditional access system provided with a client supporting communication via a client interface, handling communication with conditional access systems via clients using the client interface is executed by a client manager and descrambling of the streams is controlled by granting access to decoder descramblers to selected conditional access systems.

In the accompanying drawings one of the possible embodiments of the present invention is shown, where:
Fig. 1 presents a general structure of a digital television decoder with a system for controlling various conditional access systems;
Fig. 2 presents a schematic of communication between the conditional access system and other blocks via clients;
Fig. 3 presents a schematic of client operation;
Fig. 4 presents a structure of a client manager;
Fig. 5 presents a schematic of communication between a client manager and a CA system via a client for a CA system handling multiple streams;
Fig. 6 presents a schematic of communication between a client manager and a CA system via a client for a CA system handling a single stream;
Fig. 7 presents a procedure for handling new incoming PSI data;
Fig. 8 presents a procedure for handling new PSI data by individual clients; and
Fig. 9 presents a procedure for controlling the descrambler switch.

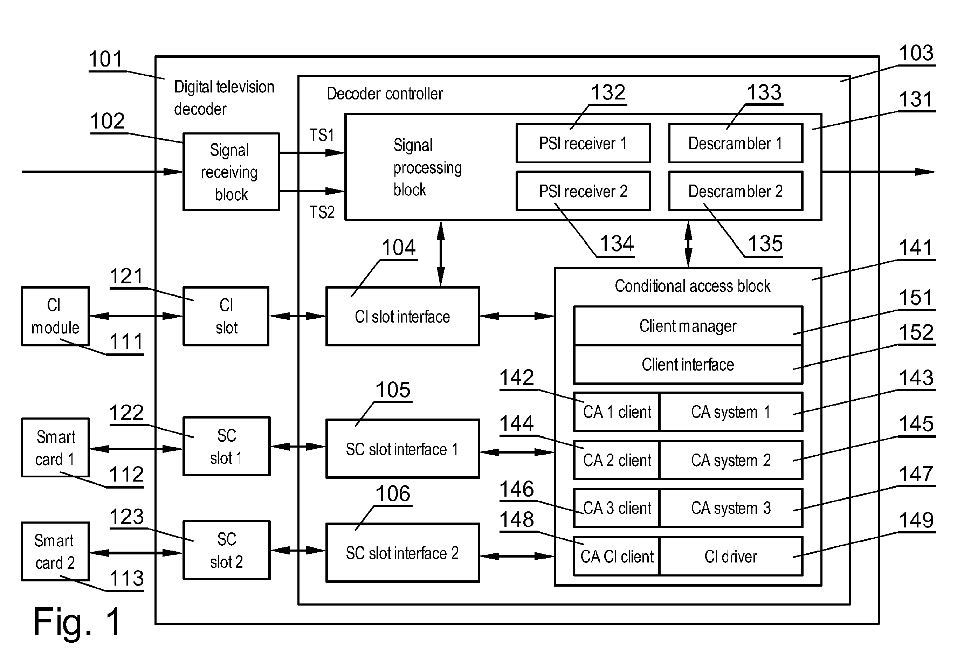

Fig. 1 presents a general structure of a digital television decoder 101 with a system for controlling various conditional access systems. The main element of the decoder 101 is a decoder controller 103, comprising specialized signal processing elements and computing modules, which operate various software modules. The decoder receives, via a signal receiving block 102, a cable, satellite or terrestrial television signal, from which are extracted two digital data streams TS1 and TS2. The streams are input to a signal processing block 131, which converts them to a format acceptable by a user terminal. For example, it may decode an MPEG stream and convert the decoded data to a PAL/NTSC format. The received streams, which are scrambled, are descrambled by descramblers 133, 135. The descramblers 133, 135 are controlled by a conditional access block 141. The descrambling process is configured by PSI data transmitted in the streams, which are read by PSI receivers 132, 134 and transmitted to the conditional access block 141. The PSI data may include a Program Map Table (PMT) and a Conditional Access Table (CAT).

The decoder is provided with a Cl slot 121 for handling Cl modules 111 and two SC slots 122, 123 for handling smart cards (SC) 112, 113. The configuration shown is exemplary only. The decoder may be provided with additional SC or Cl slots. In addition to, or instead of the Cl slot, the decoder may be provided with a slot for handling POD modules. The access to resources of the Cl module 111 is enabled by a Cl slot interface 104. The access to resources of the smart cards 112, 113 is enabled by SC slot interfaces 105, 106. These interfaces are low-level software modules and they provide the resources of a card or a module inserted to a specific slot via a specific program interface. The Cl slot interface is additionally connected to the signal processing block 131, from which it reads a scrambled stream, and after its descrambling, returns a descrambled stream.

The conditional access block 141 controls the process of descrambling of the received streams. In the presented embodiment, the streams can be descrambled by the decoder descramblers 133, 135, controlled by selected embedded conditional access systems, or by a descrambler of the Cl module, controlled by a conditional access system of the Cl module.

The conditional access block 141 cooperates with conditional access systems. These can be embedded conditional access (CA) systems 143, 145, 147, which cooperate with smart cards, or conditional access systems provided by Cl or POD modules, which may be communicated by the Cl or POD driver 149.

One of the elements of the invention are conditional access system clients 142, 144, 146, 148, which allow communication with those systems via an application program interface (API) uniform for all clients. Thanks to such solution, the other software modules of the decoder need to handle only the client interface 152 to communicate with any CA system.

The conditional access block 141 also comprises a client manager 151. The client manager 151 controls the process of descrambling streams by selecting CA systems responsible for descrambling and controlling the decoder descramblers. It can be a separate hardware module, a hardware element of the decoder controller, or a software module operated by the decoder controller.

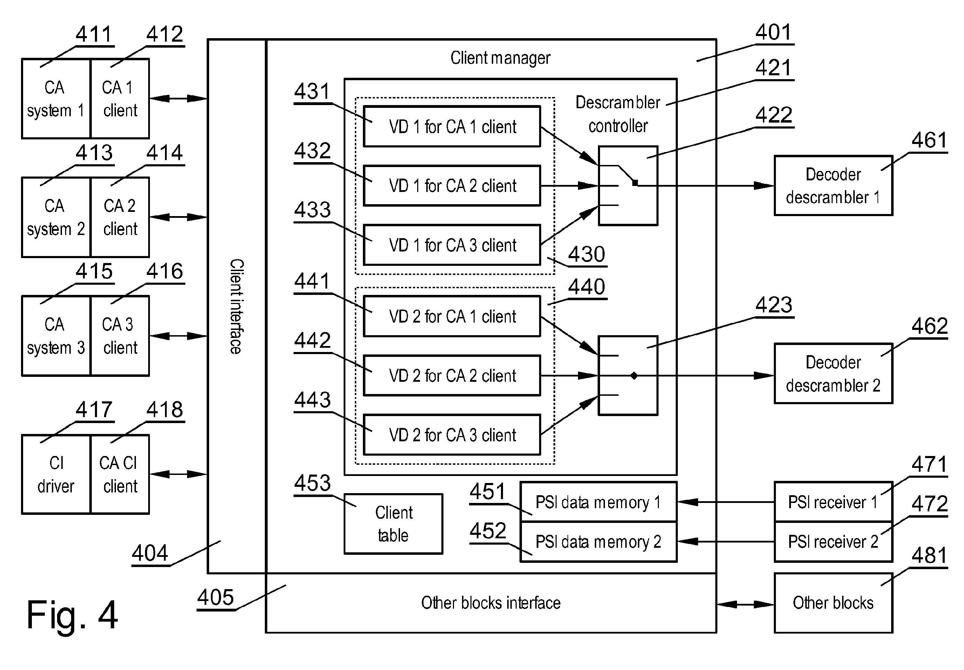

The client manager 151, described in more details in Fig. 4, provides virtual descramblers (VD), with which the clients may communicate. The virtual descramblers are software objects emulating the interface of the decoder descrambler, which allows the embedded conditional access systems to operate as if they were connected directly to the decoder descrambler. There is provided a separate set of virtual descramblers for each decoder descrambler, and each set comprises separate virtual descramblers for each client. Therefore, the total number of virtual descramblers in the system is equal to the multiple of the number of clients and the number of decoder descramblers. The number of virtual descramblers can be smaller if some clients are not registered for all decoder descramblers. In addition, the client manager contains a client table, which specifies the abilities of particular conditional access systems to descramble particular streams, the priorities of clients and the clients, which are granted access to decoder descramblers. The virtual descramblers are connected to the decoder descramblers via switches. The client manager sets the switch position according to the client table. If a client of an external conditional access system is selected, then the decoder descrambler is deactivated.

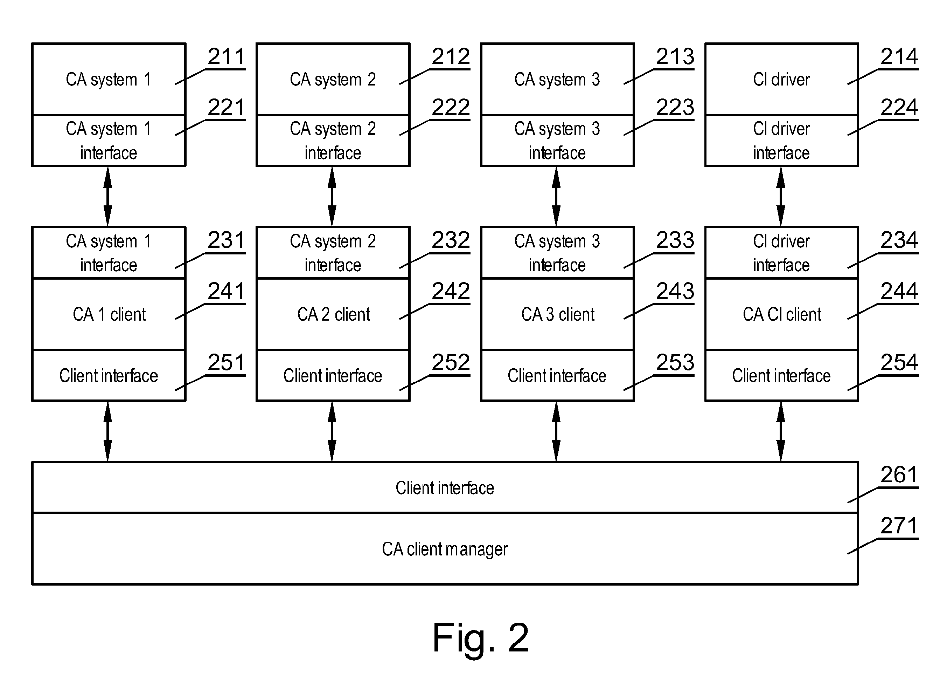

Fig. 2 presents a schematic of communication between the conditional access system and other blocks via clients. Conditional access systems 211, 212, 213, 214 communicate via system-specific interfaces 221, 222, 223, 224, respectively. Each conditional access system is handled by a separate client 241, 242, 243, 244. Each client communicates with the system via its system-specific interface 231, 232, 233, 234, respectively. The main task of the client is to convert messages read from the system-specific interface to messages of a client interface 251, 252, 253, 254, which is uniform for all clients. This allows the other blocks of the system, for example the client manager 271, to communicate with the conditional access systems via clients, using a uniform client interface 261. Preferably, all conditional access systems are provided with clients enabling communication via the client interface.

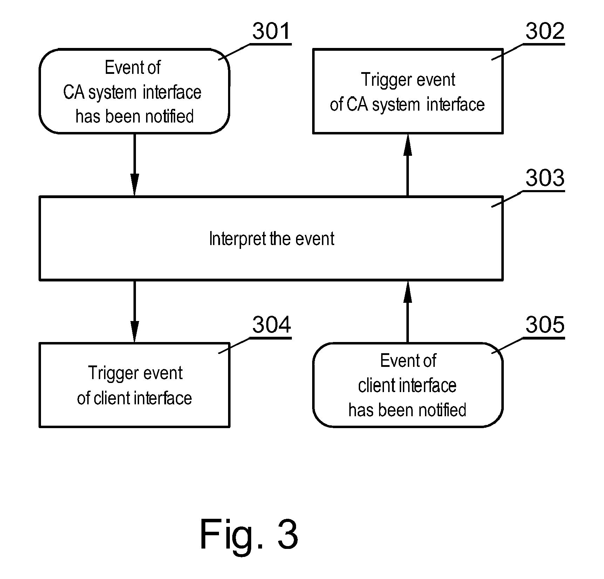

Fig. 3 presents a schematic of client operation. When, at the CA system or the Cl driver interface there appears 301 an event notified by the CA system of the Cl driver handled by the client, the client interprets 303 this event and triggers 304 a relevant event of the client interface. Similarly, when at the client interface there appears 305 an event notified by another block, for example by the client manager, the client interprets 303 this event and triggers 302 a relevant event of the CA system or the Cl driver interface it handles. This might be, for example, reading or writing specific data.

Fig. 4 presents a structure of a client manager 401. The client manager communicates with clients 412, 414, 416, 418 of conditional access systems 411, 413, 415 and of a Cl driver 417 via a client interface 404. Thus, the only requirement for systems and drivers of various types to cooperate with the manager is to be provided with a client handling the client interface functions. The client interface allows execution of commands used for stream descrambling, such as commands for configuring a specific slot of the descrambler or commands for updating descrambler keys.

The system according to the invention has been constructed in such a way that each CA system operates independently of the other systems. The cooperation of the systems is controlled by the client manager, so there is no need for any changes in the CA systems themselves to enable their cooperation.

The client manager 401 comprises a descrambler controller 421 for handling communication between clients and descramblers, by transmitting commands from a particular client of embedded conditional access system to a particular decoder descrambler. The descrambler controller 421 comprises virtual descramblers organized in sets, one set is provided for each decoder descrambler. In each set there is one virtual descrambler for each client. In the presented example, there are two sets 430, 440 with three virtual descramblers 431, 432, 433, 441, 442, 443 in each set. The virtual descrambler is a software object whose structure emulates the hardware interface of the decoder descrambler, so that each embedded CA system may operate as if it were connected directly to the hardware decoder descrambler.

An exemplary structure of the virtual descrambler as a software object is presented below. In the example, the syntax of the C language is used:

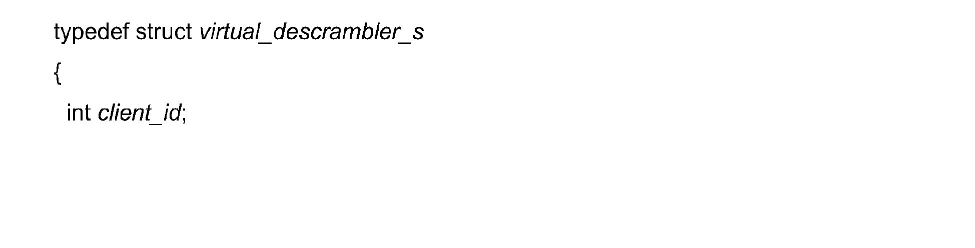

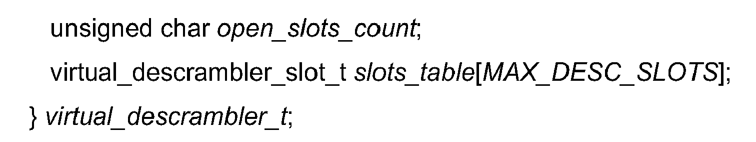

The *virtual_descrambler_s* structure comprises a table *slots_table,* describing the slots of the virtual descrambler, with the number of slots specified by a *MAX_DESC_SLOTS* constant, which emulate the slots of the decoder descrambler. A *client_id* element identifies the identifier of the client to which the virtual descrambler is assigned. The structure also comprises an indicator of the number of open slots *open_slots_count,* which is useful to determine the number of the next descrambler slot to be opened. The descrambler slots are described by the *virtual_descrambler_slot_s* structure. An example of such a structure is presented below:

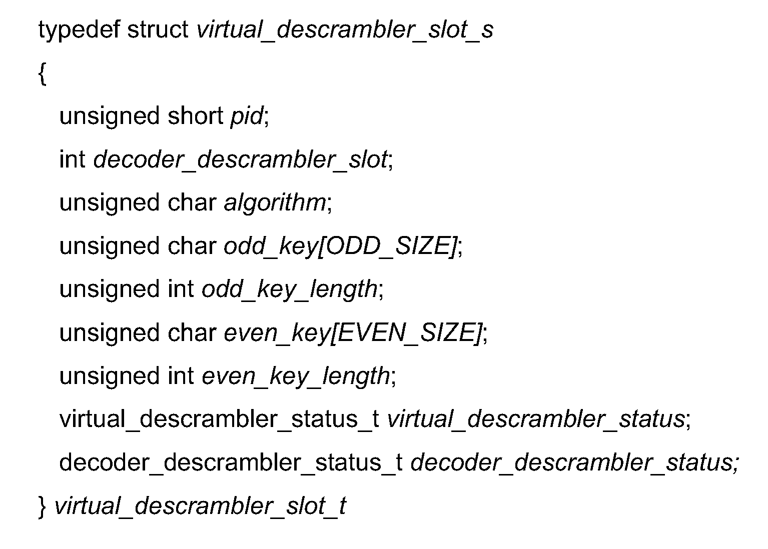

The *pid* field specifies the PID identifier of packets to be descrambled by a slot of the decoder descrambler specified in the *decoder_descrambler_slot* field. The fields *algorithm, odd_key* having the size of *ODD_SIZE* and *even_key* having the size of *EVEN_SIZE,* specify the current algorithm and the descrambling keys for a particular slot of the decoder descrambler. The fields *odd_key_length* and *even_key_length* are used to change the length of the descrambler keys during the operation. The *virtual_descrambler_status* field may have the value of "Open" or "Closed", which informs whether a particular slot has been already opened by a client. The *decoder_descrambler_status* field may have the value of "Open" or "Closed", which informs whether a particular slot of the decoder descrambler has been already opened, and is useful for debugging purposes.

The number of the slot of the virtual descrambler in the descrambler structure can be assigned consecutively for each opened slot, or can be a number referring to the number of the slot of the decoder descrambler which is to be opened by a particular conditional access system.

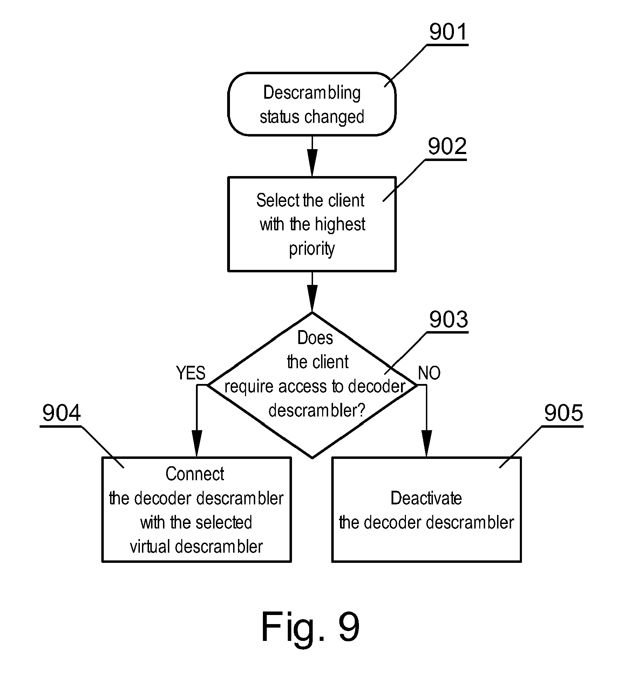

The decoder descrambler controller 421 comprises switches 422, 423 for each decoder descrambler 461, 462. Each switch connects the virtual descrambler, which is granted access to descrambling the currently received stream, with the decoder descrambler, according to the procedure shown in Fig. 9. The switch is a software object, and the setting of the switch position is performed by configuring a particular data flow path inside the switch module. Each virtual descrambler is continuously configured by the embedded CA system assigned to it, therefore after the switch is activated, the new configuration of the decoder descrambler is set immediately.

The client manager 401 also comprises an interface 405 for communicating with other blocks 481, such as middleware software, by which those blocks may gain access to data from the client table 453 or may gain access to the client interface 404, via which they may communicate with a selected CA system. For example, the other blocks may change the priority of clients if a particular high-level software module requires descrambling by a specified CA system, or collect important data from a specific conditional access system, such as a smart card number, smart card entitlements, or the versions of registered CA systems handled by clients.

The client manager 401 comprises a client table 453, which describes properties of individual clients. An exemplary format and contents of the table are presented below:

| Client | E/M | Priority | TS1 descr. capability | TS1 descr. granted | TS2 descr. capability | TS2 descr. granted |
|---|---|---|---|---|---|---|
| CA 1 | E | 5 | YES | YES | NO | NO |
| CA 2_1 | E | 2 | NO | NO | YES | YES |
| CA 2_2 | E | 2 | NO | NO | YES | NO |
| CA 3 | E | 8 | NO | NO | NO | NO |
| CA Cl | M | 3 | YES | NO | NO | NO |

The first column of the client table specifies a client identifier. For clients capable of handling a plurality of streams simultaneously, individual entries are listed in the table for each stream, such as in the case of the CA 2 client.

The second column specifies if a client handles an embedded conditional access system (E) or a system provided by an external module (M).

The third column specifies the priority of a client, which decides on priority of one system versus other systems capable of descrambling the currently received stream. Alternatively, the priority may be specified individually for each stream.

The next columns specify the ability of descrambling the TS1 and TS2 streams, as well as the client which has been granted access to the decoder descrambler for descrambling the specific stream.

In the table presented above, the clients CA 1, CA 2 and CA 3 are the clients of systems embedded in the decoder, which require access to the decoder descrambler, and the CA Cl client is a client of a conditional access system provided by a Cl module, which uses the descrambler of the module. The CA 1 and CA Cl clients are currently capable of descrambling the first stream TS1. The CA 2 client is capable of handling two streams simultaneously, and it is currently capable of descrambling the second stream TS2. The CA 3 client is incapable of descrambling any of the received streams. Therefore, the access to descrambling the first stream TS1 is granted to the CA 1 client, since it has greater priority than the CA Cl client. The access to descrambling the second stream TS2 is granted to the CA 2_1 client.

In case when the stream is to be descrambled by a decoder descrambler, a command is sent to the clients of systems using descramblers of Cl or POD modules, to deactivate those descramblers. In case when the stream is to be descrambled by a descrambler of the Cl or POD module, the other descramblers, including the decoder descrambler, are deactivated. This guarantees that the stream is descrambled by a single descrambler.

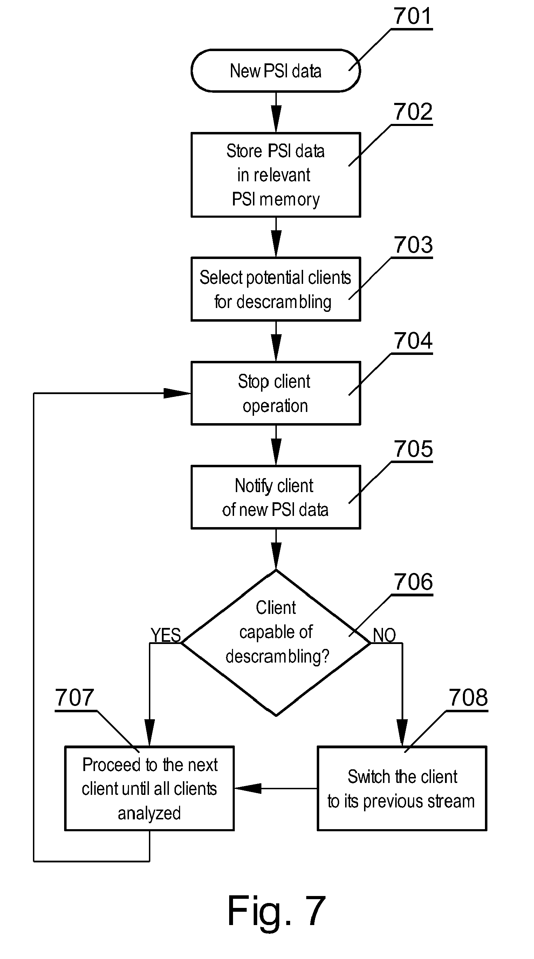

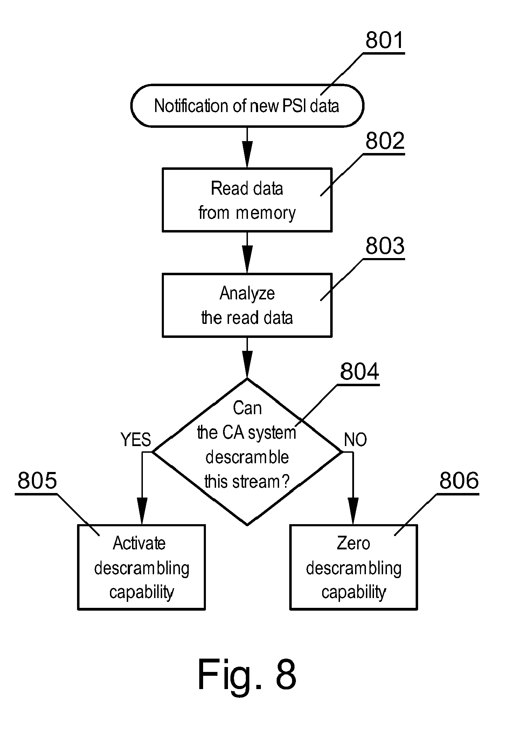

The descrambling capability is specified by each client on the basis of the PSI data, which is provided to the client by the client manager, according to the procedures shown in Fig. 7 and Fig. 8. When new PSI data arrive in a specific stream, they are sent to all clients, which currently do not have granted access to a decoder descrambler, including clients, which are currently capable of descrambling other streams. Each client receiving new PSI data of a given stream specifies its capability of descrambling this stream. If the client is not capable of descrambling the stream, and if it was previously capable of descrambling another stream, it is switched back to that previous stream. If it is capable of descrambling the stream with new PSI data, it sets its descrambling capability for that stream and configures a particular virtual descrambler assigned to it. Once all clients have specified their descrambling capability, the client with the highest priority is granted access to the decoder descrambler, i.e. the switch for that descrambler is set to a specific position. Such procedures guarantee that the client table contains up-to-date information on clients capabilities to descramble the received streams.

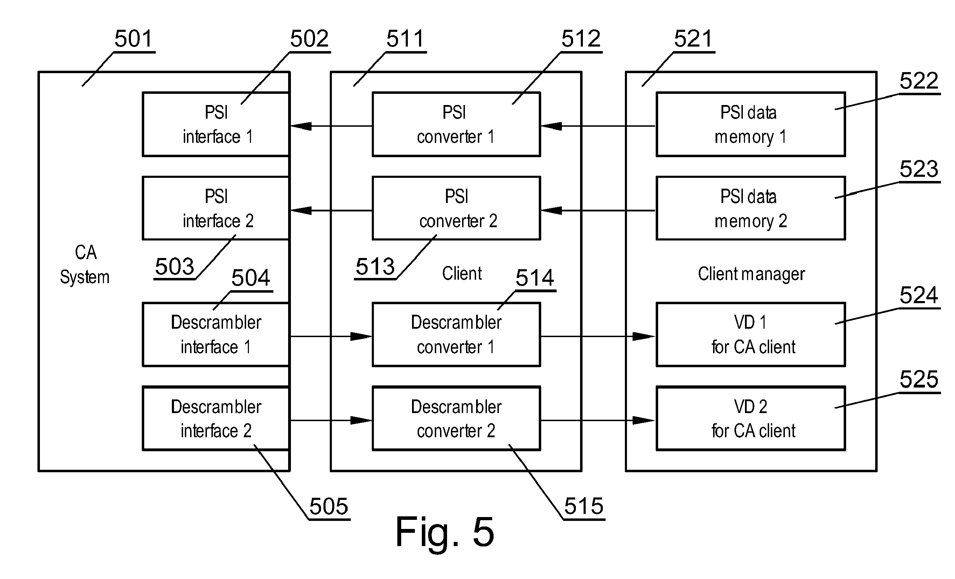

Fig. 5 presents a schematic of communication between a client manager and a CA system via a client for a CA system handling multiple streams. The CA system 501 is able to descramble several streams simultaneously, and for each stream it comprises individual PSI interfaces 502, 503 and descrambler interfaces 504, 505. The PSI interfaces 502, 503 read PSI data to configure the descrambler. The descrambler interfaces 504, 505 are used for configuring descrambler slots. The client 511 for a CA system handling multiple streams comprises individual PSI converters 512, 513 and descrambler converters 514, 515 for each stream. The PSI converters 512, 513 are used to translate commands related to PSI data between the client interface and the system-specific interface. PSI data are provided by the client manager 521 from PSI data memories 522, 523. The descrambler converters 514, 515 are used to translate commands related to descrambler configuration between the client interface and the system-specific interface. The client manager provides virtual descramblers 524, 525 for each decoder descrambler.

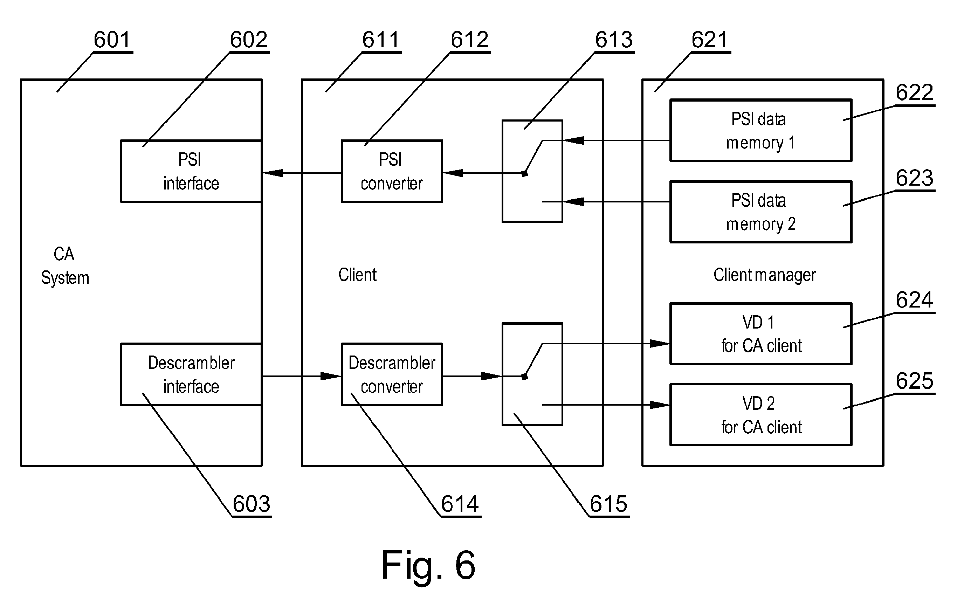

Fig. 6 presents a schematic of communication between a client manager and a CA system via a client for a CA system handling a single stream. The CA system 601 comprises a single PSI interface 602 and a single descrambler interface 603. The PSI interface 602 reads PSI data to configure the descrambler. The descrambler interface 603 is used for configuring descrambler slots. The client 611 for a CA system handling a single stream comprises a single PSI converter 612 and a single descrambler converter 614, as well as a PSI converter switch 613 and a descrambler converter switch 615. The PSI converter 612 is used to translate commands related to PSI data between the client interface and the system-specific interface. PSI data are provided by the client manager 621 from PSI data memories 622, 623, and the PSI converter switch 613 selects the PSI data memory 622, 623 from which the data will be read. The descrambler converter 614 is used to translate commands related to descrambler configuration between the client interface and the system-specific interface. The client manager provides virtual descramblers 624, 625 for each decoder descrambler, and the descrambler converter switch 615 selects the virtual descrambler 624, 625 to which configuration data will be sent. The switches 613, 615 operate synchronously, i.e. they are set to the same position.

Fig. 7 presents a procedure for handling new incoming PSI data by the client manager. The procedure starts in step 701 when new PSI data appears in a particular transport stream. The new PSI data is stored in a relevant PSI memory in step 702. Next, in step 703, the client manager selects potential clients which could descramble the stream, including the clients which currently do not have access to any decoder descrambler granted. Next, a series of steps is performed for each selected client. A command to stop current operation is sent to the client in step 704, which results in the client setting a negative descrambling capability for the currently handled stream. Then a notification on new PSI data is sent to the client in step 705. In case of a client of a system handling a single stream, the descrambling converter switch and the PSI converter switch of the client are adjusted to connect the client to a particular stream. Having received the notification, the client analyzes the data according to the procedure shown in Fig. 8 and specifies its descrambling ability for the stream. In step 706 the client manager checks if the client set a positive descrambling capability for the stream. If yes, the procedure proceeds to the next client in step 707, until all clients are analyzed. If not, in case the client was previously capable of descrambling another stream, it is switched back to that stream in step 708. The series of steps 704 - 708 may be also performed asynchronously for each client, which decreases the time necessary for specifying the descrambling capability of all clients.

Fig. 8 presents a procedure for handling new PSI data by individual clients. The client, having received a message from the client manager in step 801 about new version of PSI data, reads these data in step 802 from the PSI memory relevant for a particular transport stream and transmits it to the CA system it handles. The CA system analyzes the data asynchronously in step 803 and checks in step 804 if it is capable of descrambling the stream described by these data. If so, the client sets in step 805 a positive capability of descrambling the particular stream. If the system is a system embedded in the decoder, then it starts communicating, via the client, with the virtual descrambler assigned to it. If the system is provided by an external module, it starts communicating with the descrambler of that module. If not, the client sets in the client table a negative descrambling capability in step 806.

Fig. 9 presents a procedure for controlling the descrambler switch by the descrambler controller. The procedure is activated in step 901 when one of the clients changes its capability of descrambling of the currently received stream. For example, this may happen when one of the clients sets a positive descrambling capability to active, or when the client of the currently descrambling system sets a negative descrambling capability. Then, in step 902, the descrambler controller selects, from the clients capable of descrambling the stream, the client with the highest priority. Next in step 903 it checks if a particular client requires access to the decoder descrambler. If so, then in step 904 it sets the switch to connect the decoder descrambler with the selected virtual descrambler, so that the decoder descrambler operates according to the configuration set by the selected CA system. At the same time the operation of the descramblers in the external modules is disabled. If not, then in step 905 the operation of the decoder descrambler and descramblers of the external modules is deactivated, and the descrambling is performed by a descrambler of the selected Cl or POD module.

The described invention enables convenient coordination of various conditional access systems for descrambling a plurality of data streams. The decoder descrambler switches and sets of virtual descramblers make it possible to descramble a plurality of streams scrambled by various CA systems by using a single decoder descrambler for each stream. Therefore, it enhances the functionality of the decoder without extending its hardware structure, which saves costs and makes the solution possible to implement in current digital television decoder architectures.

The preferred embodiment having been thus described, it will now be evident to those skilled in the art that further variation thereto may be contemplated. Such variations are not regarded as a departure from the invention, the true scope of the invention being set forth in the claims appended hereto.

## Claims

1. A system for controlling conditional access systems in a digital television decoder with a signal receiving block receiving a plurality of streams, a signal processing block having a plurality of decoder descramblers and a conditional access block with at least one conditional access system provided with a client supporting communication via a client interface, **characterized in that** the conditional access block (141) additionally comprises a client manager (151) handling communication with conditional access systems (143, 145, 147) via clients (142, 144, 146) using the client interface (152) and controlling descrambling of the streams by granting access to decoder descramblers (133, 135) to selected conditional access systems (143, 145, 147).

2. The system according to claim 1, **characterized in that** the client manager is provided with a plurality of virtual descrambler sets (431, 432, 433; 441, 442, 443), each virtual descrambler set (431, 432, 433; 441, 442, 443) assigned individually to each decoder descrambler (461, 462), where the virtual descrambler sets (431, 432, 433; 441, 442, 443) comprise virtual descramblers assigned to each conditional access systems registered for the decoder descrambler (461, 462), being software objects emulating an interface of the decoder descrambler and a plurality of decoder descrambler switches (422, 423), each decoder descrambler switch (422, 423) assigned individually to each decoder descrambler (461, 462), for controlling the decoder descrambler by transmitting to it a configuration of the virtual descrambler assigned to a conditional access system which has been granted access to the particular decoder descrambler (461, 462).

3. The system according to claim 2, **characterized in that** at least one of the conditional access systems (501) is a system handling a plurality of streams and the client (511) provided for the conditional access system (501) handling a plurality of streams comprises a plurality of PSI converters (512, 513) translating commands related to PSI data between the client interface (152) and the system-specific interface and a plurality of descrambler converters (514, 515) translating commands related to descrambler configuration between the client interface (152) and the system-specific interface.

4. The system according to claim 2, **characterized in that** at least one of the conditional access systems (601) is a system handling a single stream and the client provided for the conditional access system (601) handling a single stream comprises a single PSI converter (612) translating commands related to PSI data between the client interface (152) and the system-specific interface, a single descrambler converter (614) translating commands related to descrambler configuration between the client interface (152) and the system-specific interface, a PSI converter switch (613) selecting the source of PSI data (622, 624) for the PSI converter (612)and a descrambler converter switch (614) selecting the virtual descrambler (624, 625) for sending commands related to descrambler configuration.

5. The system according to claim 1, **characterized in that** the client manager comprises a client table for storing data describing the systems handled by individual clients, the data describing at least a capability to descramble each of the streams, the data being used to select the conditional access systems to be granted access to decoder descramblers.

6. The system according to claim 5, **characterized in that** in the client table there are additionally stored priorities of individual clients, deciding on a priority of one system versus other systems to be granted access to a particular decoder descrambler.

7. The system according to claim 1, **characterized in that** the conditional access systems are systems embedded in the decoder and/or systems provided by external modules.

8. The system according to claim 1, **characterized in that** the number of decoder descramblers is equal to the number of received streams.

9. A method for controlling conditional access systems in a digital television decoder with a signal receiving block receiving a plurality of streams and a signal processing block having a plurality of decoder descramblers and a conditional access block with at least one conditional access system provided with a client supporting communication via a client interface, **characterized in that** handling communication with conditional access systems via clients using the client interface is executed by a client manager and descrambling of the streams is controlled by granting access to decoder descramblers to selected conditional access systems.

10. The method according to claim 9, **characterized in that** in the client manager there are provided a plurality of virtual descrambler sets, each virtual descrambler set assigned individually to each decoder descrambler, where the virtual descrambler sets comprise virtual descramblers assigned to each conditional access systems registered for the decoder descrambler, being software objects emulating an interface of the decoder descrambler and a plurality of decoder descrambler switches, each decoder descrambler switch assigned individually to each decoder descrambler, for controlling the decoder descrambler by transmitting to it a configuration of the virtual descrambler assigned to a conditional access system which has been granted access to the particular decoder descrambler

11. The method according to claim 9, **characterized in that** in the client manager there is provided a table for storing data describing the systems handled by individual clients, the data describing at least a capability to descramble each of the streams, the data being used to select the conditional access systems to be granted access to decoder descramblers.

12. The method according to claim 11, **characterized in that** the conditional access system to be granted access to a particular decoder descrambler is selected when in the client table a change of descrambling capability of the stream descrambled by that decoder descrambler by one of conditional access systems is detected.

13. The method according to claim 11, **characterized in that** in the client table there are additionally stored priorities of individual clients, deciding on a priority of one system versus other systems to be granted access to a particular decoder descrambler.

14. The method according to claim 11, **characterized in that** upon receiving new PSI data in a particular stream, the client manager selects potential clients for descrambling that stream, and for each selected client it sends a notification of new PSI data.

15. The method according to claim 14, **characterized in that** as the potential clients for descrambling the stream there are selected clients which do not have access granted to any decoder descrambler.

16. The method according to claim 14, **characterized in that** for clients previously capable of descrambling another stream, the client manager checks if the client is capable of descrambling the stream with new PSI data, and if not, the client is switched to the stream it was previously capable of descrambling.
